Europäisches Patentamt

European Patent Office

Office européen des brevets

(19)

(11) Veröffentlichungsnummer: **0 108 824**
**B1**

(12) **EUROPÄISCHE PATENTSCHRIFT**

(45) Veröffentlichungstag der Patentschrift:
**28.10.87**

(21) Anmeldenummer: **82110503.8**

(22) Anmeldetag: **13.11.82**

(51) Int. Cl.⁴: **B 23 K 11/08**

(54) Vorrichtung zum elektrischen Widerstands-Längsnaht-Quetschnahtschweissen.

(43) Veröffentlichungstag der Anmeldung:
**23.05.84 Patentblatt 84/21**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**DE - B - 1 050 938**
**FR - A - 2 304 434**
**GB - A - 2 006 659**
**US - A - 3 834 010**

(73) Patentinhaber: **L. SCHULER GmbH,**
**Bahnhofstrasse 41 - 67 Postfach 1222,**
**D-7320 Göppingen (DE)**

(72) Erfinder: **Panknin, Walter, Prof. Dr.-Ing., Einsteinweg 30,**
**D-7230 Göppingen (DE)**
Erfinder: **Rühl, Rolf, Rembrandtstrasse 8,**
**D-7324 Rechberghausen (DE)**
Erfinder: **Nockher, Gerhard, Jahnstrasse 19,**
**D-7333 Ebersbach (DE)**

ACTORUM AG

## Beschreibung

Die Erfindung bezieht sich auf eine Vorrichtung zum halb- oder vollautomatischen elektrischen Widerstands-Längsnaht-Quetschnahtschweissen von Dosenkörpern aus zu Zargen gerollten, sich überlappenden Blechzuschnitten, mit einer vor der Schweissstelle angeordneten Führungseinrichtung zum Festlegen der Überlappungsbreite der Zargenränder mit gefederten Führungselementen, durch die die Zargenränder beim Zulauf zur Schweissstelle gegen die Nutgründe einer Z-Schiene andrückbar sind, und mit einem im Bereich der Schweissstelle angeordneten Kalibrierkranz, mit einer derartigen Ausbildung der Führungseinrichtung, dass die Überlappungsbreite der Zargenränder an der Schweissstelle höchstens das Sechsfache der Dosenwandstärke beträgt, und mit von einer Rolle abziehbaren, über Elektrodenrollen geführten, als Flachdrahtelektroden mit einer über der Überlappungsbreite der Zargenränder an der Schweissstelle liegenden Breite ausgebildeten Drahtelektroden.

Bei einer bekannten Vorrichtung dieser Art (DE-PS 2 559 671) ist eine derartige Ausbildung der Z-Schiene vorgesehen, dass die Nutgründe der Z-Schiene in Richtung auf die Schweissstelle zu im Sinne einer stetig abnehmenden Überlappung der Zargenränder zusammenlaufen, und eine derartige Schrägstellung der Achsen der Elektrodenrollen gegenüber der zur Schweissrichtung senkrechten Ebene vorgesehen, dass die Zargenränder dadurch übereinander geschoben werden. Nachteilig an dieser bekannten Vorrichtung ist, dass das Herstellen einer derart ausgebildeten Z-Schiene schwierig und kostspielig ist, und dass eine derartig ausgebildete Z-Schiene nur mühsam an der Vorrichtung richtig einzurichten ist. Dieser Nachteil ist besonders störend, wenn Z-Schienen mit unter vorgegebenen Winkeln zusammenlaufenden Nutgründen bestimmten Schweissnahtlängen, also Zargenhöhen, und Schweissgeschwindigkeiten zugeordnet sind, so dass bei Umstellungen der Fertigung jeweils die Z-Schiene ausgetauscht werden muss. Ferner ist es bei der bekannten Vorrichtung nachteilig, dass zum Erzielen der richtigen Schrägstellung der Achsen der Elektrodenrollen eine hohe Fertigungsgenauigkeit und eine genaue Kontrolle notwendig ist.

Aufgabe der Erfindung ist es, die genannten Nachteile bei gleichzeitiger Beibehaltung einer mindestens gleich guten Funktionsfähigkeit der Vorrichtung zu vermeiden. Hierbei wird insbesondere eine einfach herstellbare und einstellbare Z-Schiene und eine einfachere Herstellung und Einstellung der Lagerungen für die Elektrodenrollen angestrebt.

Die Erfindung besteht demgemäss bei einer Vorrichtung der eingangs genannten Art darin, dass die Nutgründe der Z-Schiene im Sinne einer gleichbleibenden Überlappung der Zargenränder parallel verlaufen, und dass die Achsen der Elektrodenrollen in der zur Schweissrichtung senkrechten Ebene liegen.

Überraschenderweise hat sich herausgestellt, dass weder die bisher für erforderlich erachtete Ausbildung der Z-Schiene noch die ebenfalls bisher für erforderlich erachtete Schrägstellung der Elektrodenrollen notwendig ist, um eine befriedigende Funktionsfähigkeit der Vorrichtung im Hinblick auf das Schweissen von Dosenkörpern zu erzielen. Mit der Erfindung ergibt sich auch der Vorteil, dass die Zargen schon während des Zuführens entlang der Z-Schiene eine der Zylinderform mehr angenäherte Form annehmen als bei der bekannten Vorrichtung, bei der sich in diesem Bereich eine stärkere Kegeligkeit der Zargen ergibt. Weiter bringt die Erfindung den Vorteil mit sich, dass die Zargen ruhiger zugeführt werden, da nicht zunächst eine zu breite Überlappung erzeugt und diese dann wieder verringert werden muss; es wird also der störende Übergang von zunehmender auf abnehmende Überlappung vermieden. Schliesslich erleichtert die erfindungsgemäss vorgesehene Form der Z-Schiene das Nachschleifen verschlissener Z-Schienen zur Wiederverwendung bei einem Schweissen mit grösserer Überlappung.

Eine vorteilhafte Ausgestaltung der Vorrichtung nach der Erfindung ist in dem Patentanspruch 2 angegeben.

Ausgestaltungen der Erfindung sind in der Zeichnung dargestellt, und zwar zeigt:

Fig. 1 einen Ausschnitt aus einer elektrischen Widerstands-Längsnaht-Quetschnahtschweiss-Maschine mit einem Teil des Maschinengestelles und den Schweissarmen mit den entsprechenden Elektrodenrollen in Seitenansicht,

Fig. 2 eine vergrösserte Ansicht der Elektrodenrollen mit eingeführter Zarge in Schweissrichtung gesehen,

Fig. 3 eine Ansicht auf die Elektrodenrollen gemäss Fig. 2 von oben,

Fig. 4 einen Schnitt durch eine Z-Schiene mit in diese eingeführter Zarge nach Schnittlinie IV–IV der Fig. 5,

Fig. 5 einen Schnitt durch die Z-Schiene nach Schnittlinie V–V der Fig. 4,

Fig. 6 einen Schnitt durch die Anordnung nach Fig. 4 gemäss Schnittlinie VI–VI der Fig. 4 und

Fig. 7 eine Ansicht eines in der Schweissebene senkrecht zur Bewegungsrichtung der Zarge wirkenden Kalibrierkranzes.

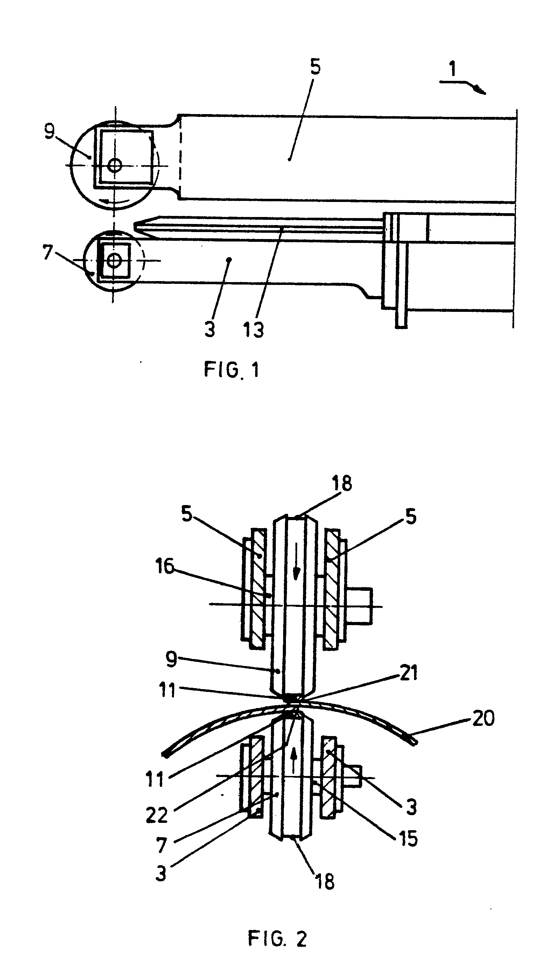

In Fig. 1 ist ein Ausschnitt einer elektrischen Widerstands-Längsnaht-Quetschnahtschweissmaschine 1 schematisch dargestellt mit einem unteren, festen Schweissarm 3 und einem oberen, schwenkbaren Schweissarm 5. An den Enden dieser Schweissarme 3, 5 befinden sich eine untere Elektrodenrolle 7 und eine obere Elektrodenrolle 9. Über diese Elektrodenrollen 7, 9 ist eine Flachdrahtelektrode 11, in Fig. 2 dargestellt, geführt, die einen etwa rechteckförmigen Querschnitt aufweist.

Die Elektrodenrollen 7 und 9 sind mit entsprechenden Rollenzapfen 15 bzw. 16 versehen, welche in entsprechenden gabelförmigen Enden des oberen bzw. unteren Schweissarmes 3 bzw. 5 angeordnet sind. Die Elektrodenrollen 7 und 9 weisen je eine Ringnut 18 zur Aufnahme der Flachdrahtelektrode 11 auf. Die Flachdrahtelektrode 11 steht, wie aus Fig. 2 ersichtlich, entsprechend über das Profil der Elektrodenrollen 7 und 9 vor, liegt aber im übrigen satt in der Ringnut 18.

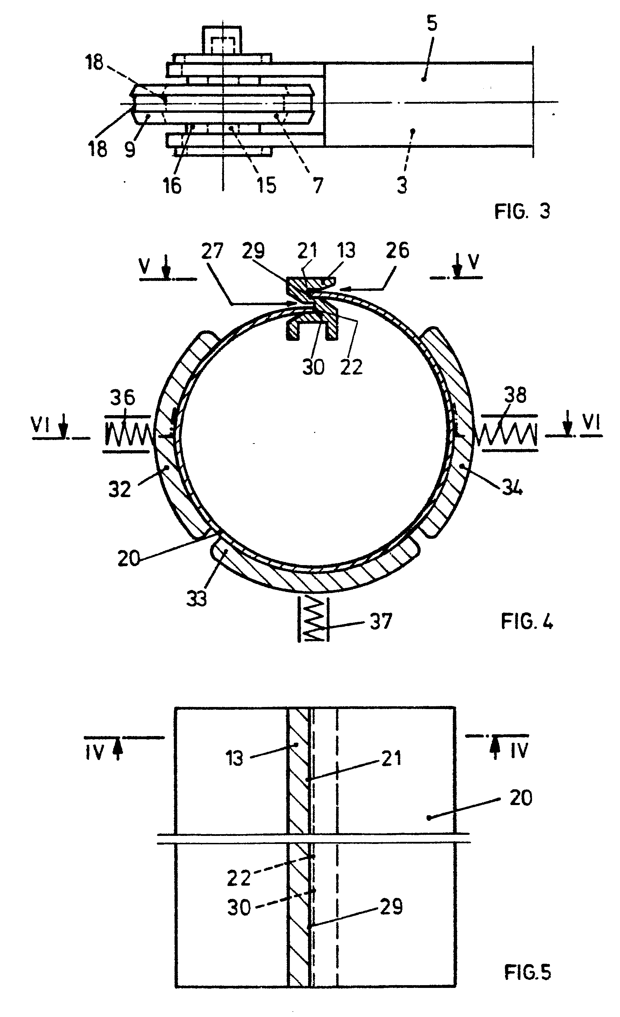

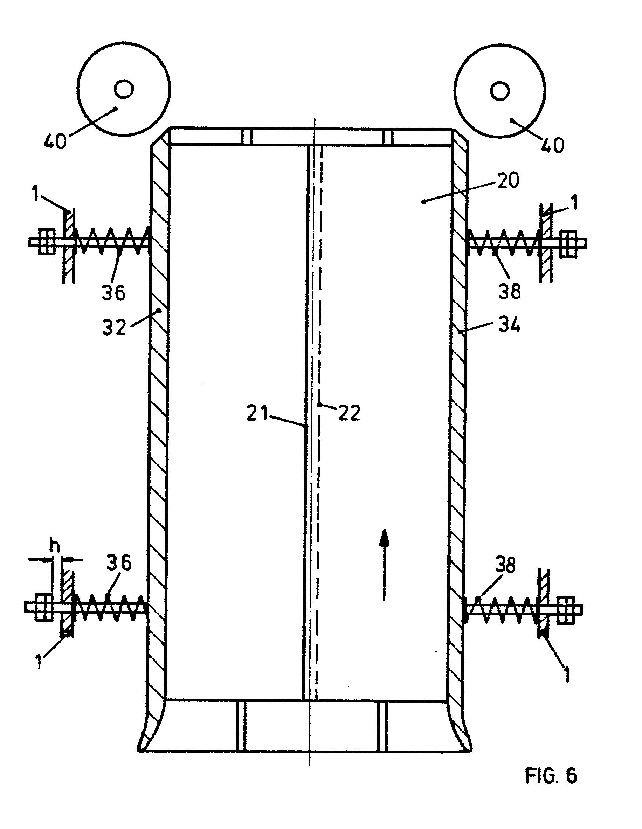

In Fig. 4 ist ausser einer Z-Schiene 13 auch eine Zarge 20 mit den Zargenrändern 21 und 22 dargestellt, welche Zargenränder 21 und 22 in der oberen bzw. unteren Nut 26 bzw. 27 eingeführt und mittels seitlich angeordneter Führungsbacken 32 bis 34 entsprechend auf einen oberen Nutengrund 29 der Nut 26 und einen unteren Nutengrund 30 der Nut 27 gepresst werden. Einstellbare Federn 36 bis 38, am einen Ende an der Schweissmaschine abgestützt und je paarweise angeordnet, drükken die Führungsbacken 32 bis 34 mit der entsprechenden Kraft auf die Zarge 20, was im Hinblick auf eine genaue Führung der Zargenränder 21 und 22 und insbesondere deren genaue Überlappung von massgebender Bedeutung für ein erfolgreiches Schweissen ist. Wie aus den Fig. 5 und 6 hervorgeht, verlaufen die beiden Nuten 26 und 27 bzw. Nutengründe 29 und 30 parallel zueinander im Sinne einer gleichbleibenden Überlappung der Zargenränder 21 und 22. Diese in Richtung des Schweissvorganges gleichbleibende Überlappung ermöglicht es, ein Schweissgut mit längs der Schweissnaht praktisch konstanter Überlappung herzustellen.

Im gleichen Sinne wirken auch die in Fig. 2 dargestellten Elektrodenrollen 7 und 9, deren Achsen in der zur Schweissrichtung senkrechten Ebene liegen.

In diesem Sinne hat es sich als vorteilhaft erwiesen, die Überlappung der Zargenränder 21 und 22 an der Schweissstelle drei- bis sechsmal der Blechdicke zu wählen, während die Breite der Flachdrahtelektrode 11 entsprechend zwei- bis dreimal der Überlappungsbreite gewählt sein kann.

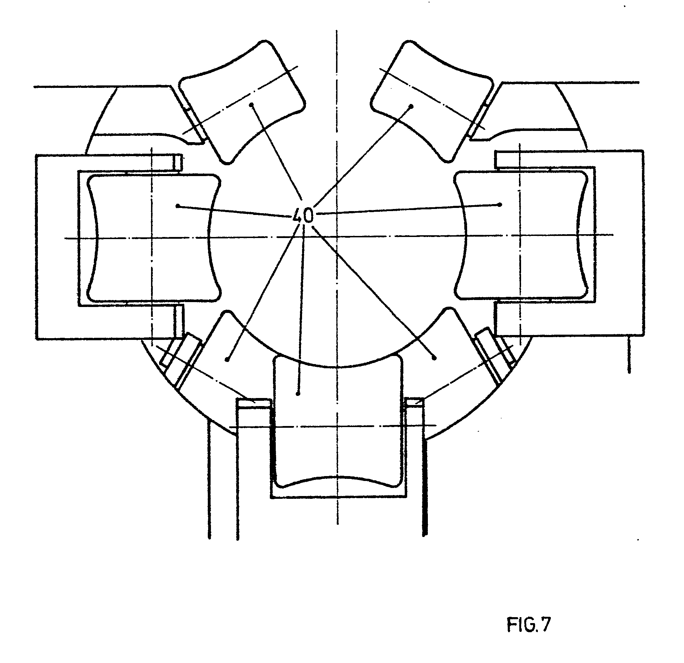

Um die gleichbleibende Überlappung der Zargenränder 21, 22 zu sichern, wird die Zarge 20 durch die Führungsbacken 32 bis 34 in die Nutengründe 29 und 30 gepresst, wobei der Pressdruck durch entsprechendes Spannen oder Entspannen der Federn 36 bis 38 den Umständen angepasst werden kann. In Fig. 6 ist der – einstellbare – Hub h dargestellt. Ohne diese Führungsbacken 32 bis 34 kann ein gutes Anliegen der Zargenränder 21 und 22 in der Z-Schiene 13 nicht garantiert werden. Der Pressdruck der Führungsbacken 32 bis 34 darf natürlich nicht zu hoch sein, da sonst die Zargenränder 21, 22 an der Z-Schiene 13 beschädigt werden können und/oder sie dem Fortbewegen der Zarge 20 einen zu grossen Widerstand entgegensetzen. Den drei Führungsbacken 32 bis 34 schliesst sich – auf der Höhe der Schweissstelle – ein Kalibrierkranz aus drehbaren, fest angeordneten, aber einstellbaren Kalibrierwalzen 40 an, wie diese in Fig. 7 dargestellt und in Fig. 6 angedeutet sind. Anstelle der einfacheren Führungsbacken 32 bis 34 könnten auch eine Anzahl eng aufgeschlossener federnder Zentrierkränze vorgesehen werden.

Die zu verschweissenden Zargenränder 21 und 22 der Zarge 20 werden überlappend zwischen die beiden Abschnitte der Flachdrahtelektrode 11 eingeführt, wobei der Bereich, in dem sich die beiden Zargenränder 21 und 22 der Zarge 20 überlappen, schmaler ist als die Breite der Abschnitte der Flachdrahtelektrode 11. Das Mass der Überlappung bezüglich der Breite der Flachdrahtelektrode 11 kann verschieden festgelegt werden, wobei jedoch die Überlappung jedenfalls schmaler als die Breite der Flachdrahtelektrode 11 werden soll. Vorzugsweise liegt die Überlappung in der Mitte der Abschnitte der Flachdrahtelektrode 11, wobei die Breite der Überlappung etwa der halben Breite der Abschnitte der Flachdrahtelektrode 11 entspricht.

## Patentansprüche

1. Vorrichtung zum halb- oder vollautomatischen elektrischen Widerstands-Längsnaht-Quetschnahtschweissen von Dosenkörpern aus zu Zargen (20) gerollten, sich überlappenden Blechzuschnitten, mit einer vor der Schweissstelle angeordneten Führungseinrichtung zum Festlegen der Überlappungsbreite der Zargenränder (21, 22) mit gefederten Führungselementen (32 bis 34), durch die die Zargenränder (21, 22) beim Zulauf zur Schweissstelle gegen die Nutgründe (29, 30) einer Z-Schiene (13) andrückbar sind, und mit einem im Bereich der Schweissstelle angeordneten Kalibrierkranz (40), mit einer derartigen Ausbildung der Führungseinrichtung, dass die Überlappungsbreite der Zargenränder (21, 22) an der Schweissstelle höchstens das Sechsfache der Dosenwandstärke beträgt, und mit von einer Rolle abziehbaren, über Elektrodenrollen (7, 9) geführten, als Flachdrahtelektroden (11) mit einer über der Überlappungsbreite der Zargenränder (21, 22) an der Schweissstelle liegenden Breite ausgebildeten Drahtelektroden (11), dadurch gekennzeichnet, dass die Nutgründe (29, 30) der Z-Schiene (13) im Sinne einer gleichbleibenden Überlappung der Zargenränder (21, 22) parallel verlaufen, und dass die Achsen der Elektrodenrollen (7, 9) in der zur Schweissrichtung senkrechten Ebene liegen.

2. Vorrichtung nach Anspruch 1, dadurch gekennzeichnet, dass der Überlappungsbereich der beiden Zargenränder (21, 22) wenigstens nahezu in der Mitte der Breitenausdehnung der zur Verfügung stehenden Flachdrahtelektroden(11)-Kontaktfläche liegt.

## Claims

1. Apparatus for the semi-automatic or fully automatic electrical resistance straight bead mash seam welding of can bodies from overlapping tin blanks rolled up to form cans (20), with a guide device located in front of the welding point and intended for determining the overlap width of the can edges (21, 22) and having sprung guide elements (32 to 34), by means of which the can edges (21, 22) can be pressed against the groove bottoms (29, 30) of a Z-shaped rail (13) during the approach to the welding point, and with a calibrating ring (40) arranged in the region of the welding point, the guide device being designed in such a way that the overlap width of the can edges (21, 22) at the welding point amounts at most to six times the can wall thickness, and with wire electrodes (11) which can be drawn off from a roll, are guided via electrode reels (7, 9) and are designed as flat-wire electrodes (11) of a width exceeding the overlap width of the can edges (21, 22) at the welding point, characterized in that the groove bottoms (29, 30) of the Z-shaped rail (13) extend parallel to one another for the purpose of a uniform overlapping of the can edges (21, 22), and in that the axes of the electrode reels (7, 9) lie in the plane perpendicular to the welding direction.

2. Apparatus according to Claim 1, characterized in that the overlap region of the two can edges (21, 22) is located at least virtually in the centre of the width span of the available contact surface of the flat-wire electrodes (11).

**Revendications**

1. Dispositif pour souder longitudinalement, par écrasement et résistance électrique, en semi-automatique ou en automatique, des corps du type boîte fabriqués à partir de flans de tôle roulés pour donner des viroles (20) et venant à recouvrement, comportant un dispositif de guidage, disposé en avant de la station de soudage, pour définir la largeur de recouvrement des bords des viroles (21, 22) au moyen d'éléments de guidage élastiques (32 à 34) au moyen desquels on peut appuyer les bords des viroles (21, 22), au cours de l'avance en direction de la station de soudage, contre les fonds de rainures (29, 30) d'un rail en Z (13), et comportant une couronne de calibrage (40) disposée au voisinage de la station de soudage, avec une conception du dispositif de guidage telle que la largeur de recouvrement des bords des viroles (21, 22) à la station de soudage se monte au maximum à six fois l'épaisseur de la paroi de la boîte, et comportant des fils-électrodes (11), que l'on peut tirer d'une bobine, qui sont guidés par des roulettes-électrodes (7, 9) et qui sont conçus sous forme de fils-électrodes plats (11) d'une largeur supérieure à la largeur de recouvrement des bords des viroles (21, 22) à la station de soudage, caractérisé en ce que les fonds de rainure (29, 30) du rail en Z (13) s'étendent parallèlement, au sens d'un recouvrement constant des bords des viroles (21, 22); et en ce que les axes des roulettes-électrodes (7, 9) sont situés dans le plan perpendiculaire à la direction du soudage.

2. Dispositif selon la revendication 1, caractérisé en ce que la zone de recouvrement des deux bords des viroles (21, 22) se trouve au moins approximativement au milieu de l'extension, dans le sens de la largeur, de la surface de contact des fils-électrodes plats (11) dont on dispose.

FIG. 1

FIG. 2

FIG. 3

FIG. 4

FIG.5

7

FIG. 6

FIG. 7